Europäisches Patentamt

**European Patent Office**

**Office européen des brevets**

(11) Publication number: **0 136 474**
**A1**

# (12) EUROPEAN PATENT APPLICATION

(21) Application number: **84109298.4**

(22) Date of filing: **06.08.84**

(51) Int. Cl.⁴: **H 01 M 2/02**
**H 01 M 10/06**

(30) Priority: **09.08.83 IT 2248083**

(43) Date of publication of application:
**10.04.85 Bulletin 85/15**

(84) Designated Contracting States:
**AT BE CH DE FR GB LI LU NL SE**

(71) Applicant: **ACCUMA S.p.A.**
**Via Medici 14**
**I-20052 Monza(IT)**

(72) Inventor: **Pigatto, Edro**
**Via Borgese 4**
**I-20100 Milano(IT)**

(74) Representative: **Lecce, Giovanni**
**Dott. Giovanni Lecce & C. S.r.l. Via G. Negri 10**
**I-20123 Milano(IT)**

(54) Container for elements of traction batteries.

㊗ A container for elements of traction batteries with several cells, having a width equal to that of a single container and a length equal to the addition of the lengths of the single containers it embodies and whose walls (1, 2, 3) are thin and provided with ribs (4). The ribs (4) protrude inwards with a thickness not inferior to a quarter of the thickness of the walls and their number is such as to give a section modulus equal to that of a wall 3,5 mm thick.

The walls of variable length can also be provided with ribs (4) which can be alternated with slots so as to create an insulation and centring system for the positive plates.

Fig. 1

EP 0 136 474 A1

0136474

# CONTAINER FOR ELEMENTS OF
# TRACTION BATTERIES

This invention concerns a container for elements of traction batteries.

In particular, this invention concerns a container with several cells for elements of traction batteries having a reduced wall thickness.

The elements of industrial accumulator batteries and particularly traction ones are usually assembled i n single containers according to a discrete series (usually 6) of heights, basically grouped around two nominal widths of 200 and 160 mm. The whole length series develop with such heights and widths, each container varying from its preceding one in a constant or step space, traditionally of 18 mm for a nominal width of 200 mm and of 16 mm and 19 mm for a nominal width of 160 mm.

It is evident that there are numerous types of containers in existence to meet all needs.

For this reason producers have always proceeded to mold single containers, above all because of equipment costs, so as to produce containers of various measures, even too numerous for rather small productions. This fact compels the producer to make batteries with repeated double walls, the inactive plastic material of which occupies part of the active section of the battery and of the acid.

In order to keep within certain limits the interchangeability of containers towards the user, as well as the adaptability towards the producer, thermoplastic materials of higher fluidity having better mechanical features have been employed so as to reduce external dimensions, keeping internal dimensions functionally identical with the old productions in hard rubber (ebonite), with the sole reduction of the walls of 1÷2 mm. With the employment of these thermoplastic materials of higher flexibility, therefore, batteries with repeated double walls have also been made.

The purpose of this invention is to eliminate the abovementioned troubles.

In particular, the purpose of this invention is to provide a container with several cells ( a multiple-cell container) for elements of traction batteries which are not provided with double walls for each element.

According to this invention these and other purposes are achieved by employing multiple containers having thin walls as, for instance, of 2,5 mm instead of the present walls which are 5 mm thick, and also by providing such walls with a series of ribs.

With the employment of multiple containers, according to this invention, in each cell of the multiple the thickness of one wall is recovered, that is, an average of 3,5 mm to be added to the value obtained from the reduction of the thickness of the walls, that is with a remarkable free space availability for each cell.

Since external dimensions have been universally unified, by the IEC in particular, it is preferable, widths accepted, to retain as the measure of the multiple length the addition of the length values of the unified containers. An internal minimum space of 3,25 mm is thus made available as excess of length over the present internal measure.

According to this invention, such space availability is used for the ribs, which pursue a double aim:

a) to keep internal measures identical with those of the unified series, for which the known assembly systems can be used, and

b) to create conditions favourable to the inflow of plastic material during molding, or to create walls of better rigidity according to the vertical axis, even with ground reduction and to have containers which permit a downward flow of acid within the channels between the ribs.

The number, width and thickness of these ribs can vary according to the compacting uniformity desired and to the need to obtain a particular elevation of the section modulus.

Ribs usually protrude towards the interior of the container with a thickness not inferior to a quarter of the thickness of the walls, plus nearly a millimeter for the reduction of the thickness of the walls themselves. The number of ribs is preferably such that the section modulus of the sections of the walls in sense of height results higher than that of a wall with a thickness of at least 3,5 mm.

The overthickness of the ribs meant for the compacting of the set is preferably of 0,5 mm, uniform to the whole length and the same for the whole series of containers; whereas the one meant for the compacting of the positive plates is proportional to the number of plates and preferably higher than 0,2 mm for each positive plate.

A favourite distance between ribs is of 12 mm and the favourite thickness of each rib is of 3 mm.

The walls provided with ribs , according to this invention, permit a more rapid and rational electrolyte circu lation according to the flux lines which, reascending from the centre of the element, descend from above, through the slots formed on the rib walls, to the prisms, flowing parallel to them to re-enter between the plates at the centre of the sets.

Ribs can be obtained also on walls at variable length with the aim of spacing plates and separators accurately, creating an insulation almost without discontinuity. In this case, ribs protrude inwards, have decreasing width, and shift spaces equal to the step of the series, particularly 16 - 18 - 19 mm. They are placed in such a way that their apex comes alongside the frame surrounding the negative, while the edges of the two adjoining separators lean against its slanting edges, thus creating a system of continuous insulation.

The invention can be advantageously applied to any multiple, even if a container with two adjoining cells is preferred, inasmuch as it represents the greatest common factor of all the combinations of elements in the present containment tanks.

The multiple container object of this invention can be applied to the so-called continental series, of a nominal width of 200 mm with a step of 18 mm; to the English series, of a nominal width of 160 mm and a step of 16 mm; and finally to what is normally called American series, of a nominal width of 160 mm and a step of 19mm. The multiple container object of this invention can be closed by thermal welding either with a multiple cover for external connectors, that is, welded over the cover itself or for connectors passing across sections or even for terminal connectors over the cover and passing through.

Naturally, for small consumers, it can be closed with the old type of inserted sealing cover.

The multiple container object of this invention, specially if provided with a fender conveyor, contributes to combat acid stratification and to increase the uniformity and the constant utilization of the plates, thanks to the slight increase of acid volume but above all to the better circulation with even flow.

The multiple container object of this invention, specially in its higher elements, offers besides the advantage of a higher static stability onprocessing lines given its enlarged basis.

The walls of this multiple container have a flexible section in the upper part, devoid of ribs, which facilitates the eventual insertion of connectors passing across sections.

In order to understand the constructive and functional features of the multiple-cell container object of this invention better, it will be described in greater detail below, making reference to the figures enclosed, which represent some of the preferred embodiments and are to be taken as examples which are by no means restrictive. In the drawings:

Figure 1 is a plan of the schematic view of a two-cell container having wide fixed ribbed walls;

Figures 2, 3 and 4 represent a schematic view of the sections of the container in Figure 1, the cutting planes showing the lines A-A, B-B and C-C respectively;

Figure 5 is a view of the back of the container in Figure 1;

Figure 6 is the enlarged schematic view of the detail pointed out with a VI in figure 1;

Figure 7 is the enlarged schematic view of the detail pointed out with a VII in figure 4;

Figures 8 and 9 show sectional and plan views respectively of a cover having all its poles passing over the same;

Figures 8a and 9a represent respectively the sectional and plan view of another type of cover having a couple of poles passing over the same;

Figure 10 gives a plan view of a different embodiment of the two-cell container object of this invention, the ribs of which are cut even on four walls at variable length;

Figures 11, 12, and 13 give a schematic view of the sections of the container in figure 10, the cutting planes showing the lines A-A, B-B and C-C of figure 10 respectively;

Figure 14 gives a schematic view of the back of the container in figure 10;

Figure 15 gives an enlarged schematic view of the detail pointed out with a XV in figure 10;

Figure 16 gives an enlarged schematic view of the detail pointed out with a XVI in figure 11;

Figure 17 gives a schematic plan view of a further embodiment of the two-cell container object of this invention, the ribs of which are cut on all walls and those on the walls of variable length protrude inwards and recede outwards;

Figures 18, 19 and 20 give a schematic view of the sections of figure 17, the cutting planes showing the lines A-A, B-B, and C-C of figure 17 respectively;

Figure 21 gives a schematic view of the back of the container in figure 17;

Figure 22 gives an enlarged schematic view of the detail pointed out with a XXII in figure 17, and

Figure 23 gives an enlarged schematic view of the detail pointed out with a XXIII in figure 18.

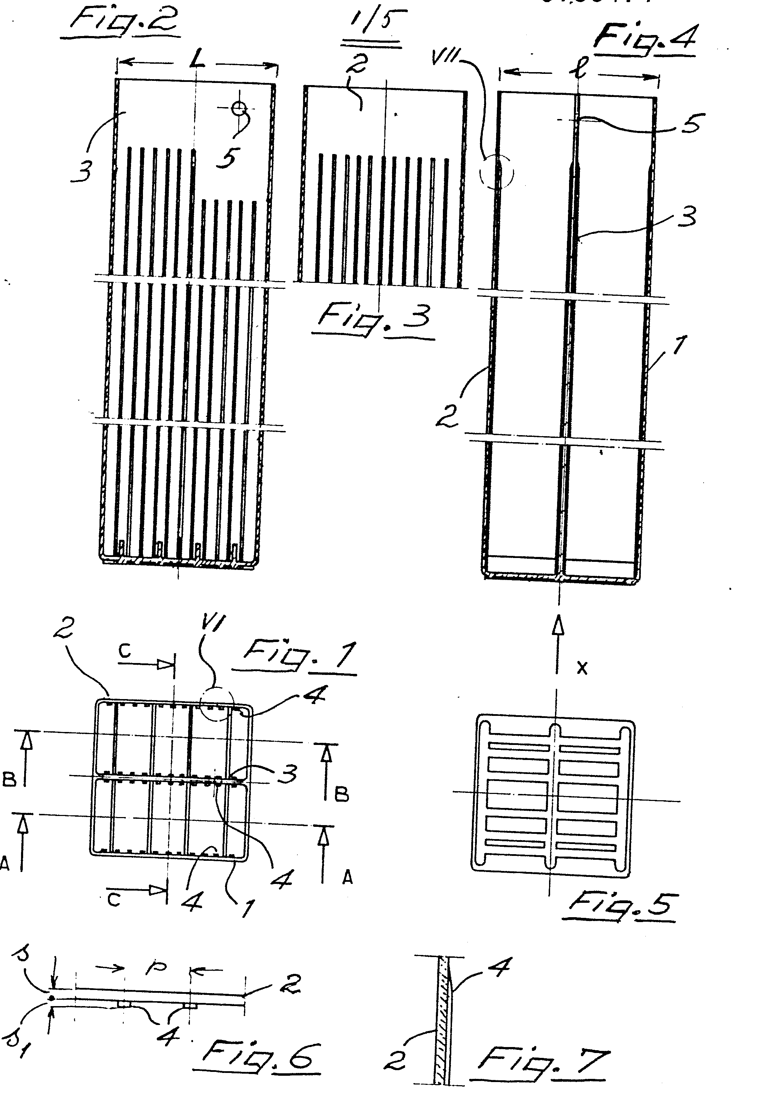

With reference to the embodiment illustrated in figures 1-7, the two-cell container object of this invention comprises two external walls 1 and 2 and the internal ones 3 of standardized width "L" and thickness "s", with ribs 4 of thickness "sl" and spaced in between by a step "p".

The thickness "s" of the walls is of 2,5 mm. The internal working length "lu" of the container coincides with that of single containers minus a compacting factor, which will be explained below, whereas the whole external one "l" is equivalent to the addition of the lengths of unified single containers. The total heights and the heights of the prisms are those unified or other wise required by the producer. The ribs 4 have a height limited to the working height of the plates as a result of which the upper part of the walls is free from ribs to a height of 80 mm. Besides, such ribs are lowered in the area of the middle wall 3 in which a hole 5 can be opened to let connectors go through.

The ribs 4, as shown in fig. 7, present a tapered end hole which permits a soft accompaniment of the set.

The thickness "sl" of the ribs is of at least 2 mm, but it can be enlarged, if desired, to a thickness proportional to the number of positive plates of the set, with which a constant compacting factor is ensured. Thus, for instance, there is minimum compacting in the case of a container with two positive plates and ribs 2 mm thick; whereas in the case of a container with 10 positive plates, the thickness is of 4 mm. The thickness of the ribs is therefore variable according to the number of plates adopted.

On the edges of the double container described above, after inserting the sets with their traditional cylindrical poles, the cover 81 illustrated in fig. 9 can be thermally welded, in which process two sumps 82 and 82' are placed on the respective poles. For that purpose, both sumps 82 and 82' have two couples of holes 83 and 83' at the base with clearance as to the pole, which is subsequently obliterated with suitable rubber sealing.

Locking with elastic seal can be employed in particular. In the case of a partial welding of the container passing across section for the internal connection of both sets, the double container can be coupled to a cover 91, as illustrated in fig. 9, provided with a single couple of sumps 92 with their holes 93. The poles and sealing means are placed in such holes 93, with the exit of the only terminal poles for the series connection with the two elements of the next container.

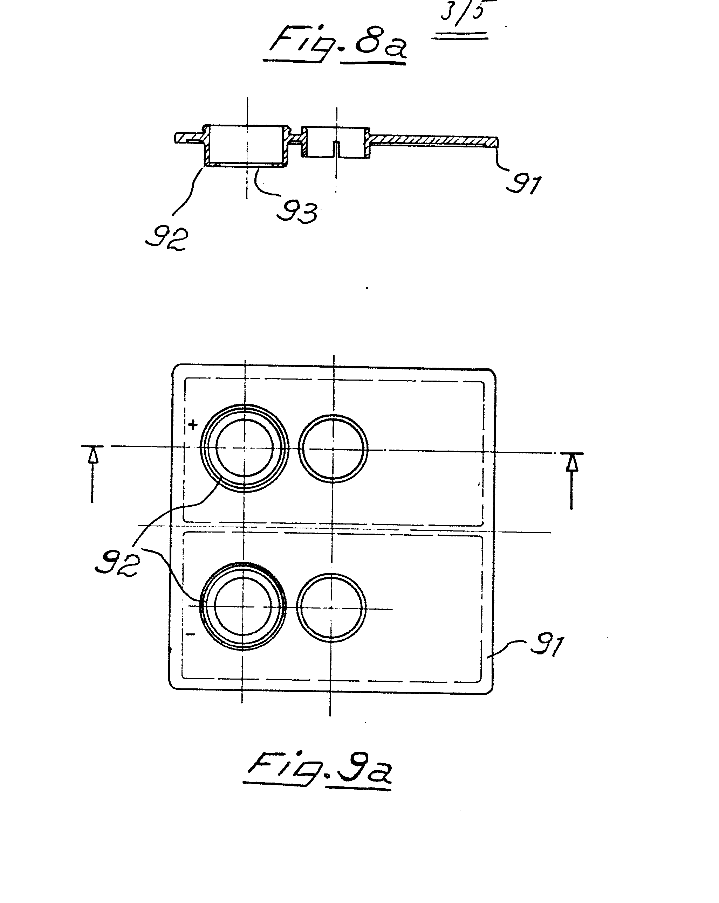

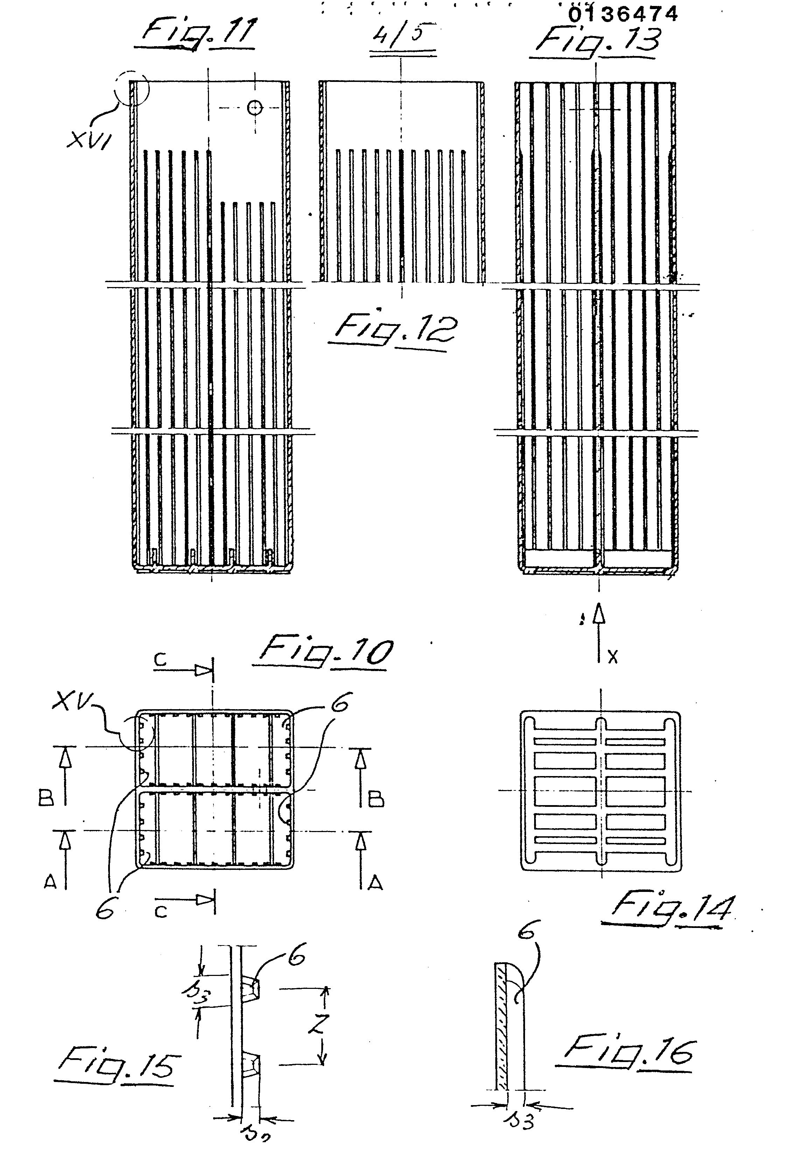

Figures 10 to 16 show a variant of the double container object of this invention, for which the numerations and indications given for the particular elements of the preceding figures are valid.

An essential variant of this embodiment is represented by the ribs 6 which appear against the outer frame of each negative and whose sides adhere to the two seperators coupled to the negative.

The distance "Z" between two/ribs is characterized by the step of the typical series, that is, 18 mm for the continental series, 16 for the English and 19 for the American. The protrusion "s2" of every rib is of 3 mm, for each part, for which reason in each cell such protrusion equals the difference between plates and the distance between walls ( for the continental series the width of the plates is usually of 184 against 191 for the cell, that is, the difference is equal to 7 mm).

The bottom thickness "s3" of each rib is usually of 4,5 mm, which corresponds to the average thickness of the ordinary negatives of a normal series. The negative, metal-cladded between both ribs and both separators, remains well-centred and is not reached by lead deposits which tend to originate short circuits during the life of the battery.

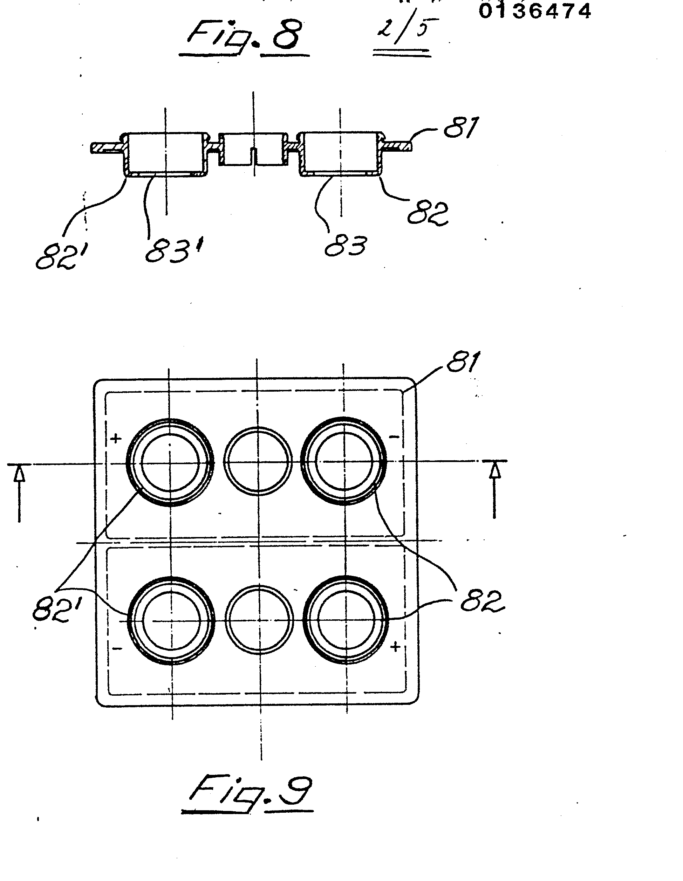

The covers illustrated in figs. 8 - 8a, 9 and 9a can also be employed for this type of container.

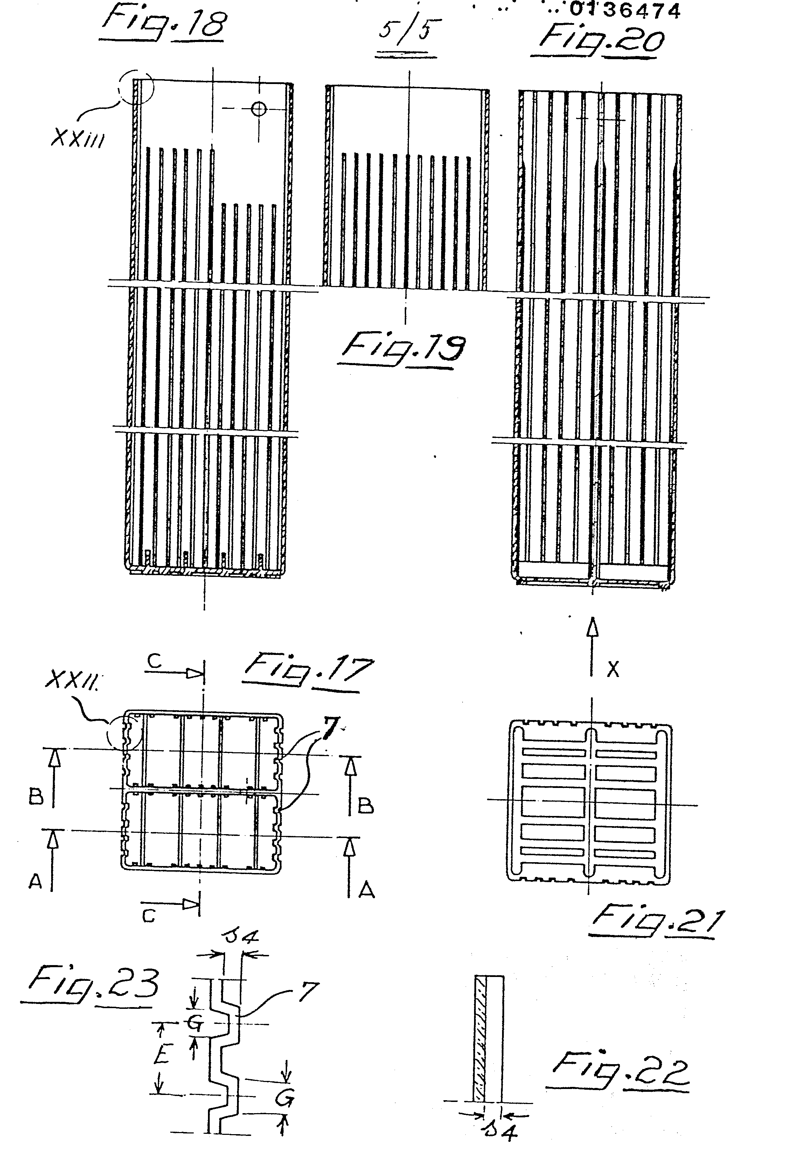

Figures 17 to 23 illustrate a third variant of the double container shown in figures 1 to 7, in which the features identified by the same numbers remain unchanged. The essential variant of this embodiment is represented by a series of ribs and slots 7, with which the four walls of variable length are provided. Such ribs and slots can be obtained in relation to the centre lines of single positive plates.

Ribs and slots 7 have a width "Ea" of about 8 mm equal to a measure slightly reduced with respect to the usual diameter of the small tubes of the armored plates, against which it will lean. The "s4" protrusion thickness of ribs and slots 7 is of 3 mm and it makes it possible to obtain, at the back of the ribs, deep outer slots of about 3 mm with a width "G" of about 4 mm.

Slots are slightly tapering in keeping with separators. With these devices the containers of two cells object of this invention make it possible to insulate the positive plates by centring them and to have cooling areas on the outside, specially obtained for high capacity elements that is with numerous plates of great length.

With the type of container illustrated in figures 17-23 the covers illustrated in figures 8 - 8a, 9 and 9a must be modified so as to obtain outer edges in conformity with the profile of the container, so as not to obliterate cooling channels.

All the structure and functioning details remain valid for them.

CLAIMS

1. A container for elements of traction batteries wherein there are several cells, has a width equal to that of a single container and a length equal to the addition of the lengths of the single containers it embodies and it is provided with thin ribbed walls.

2. A container according to claim 1, wherein the ribbed walls are the wider ones.

3. A container according to claim 1 or 2, wherein the ribs protrude inwards with a thickness not inferior to a quarter of the thickness of the walls.

4. A container according to claim 3, wherein the ribs have an over-thickness of about 0,5 mm which is uniform and constant, and an overthickness higher than 0,2 mm for each positive plate.

5. A container according to any of the preceding claims, wherein the number of ribs is such that the section modulus of the walls is, with respect to height, higher than that of a wall at least 3,5 mm thick.

6. A container according to any of the preceding claims, wherein the upper part of the walls is lacking in ribs for the passage of connectors.

7. A container according to any of the preceding claims, wherein the walls of variable length are provided with ribs protruding inwards and placed in such a way that their apex draws near the frame surrounding the negative and the edges of contiguous separators lean against its edges.

8. A container according to any of the preceding claims, wherein the walls of variable length are provided with a series of ribs and slots on which the edges of each positive plate lean creating a_n insulation and centring system for such plates.

9. A container according to any of the preceding claims, wherein there are two cells.

10. A container according to any of the preceding claims, which is locked by thermal welding, with a cover provided with holes having sumps for the elastic passage and fixing of poles and with a thermal welding outer cup consistent with the type of container.

Fig.2

Fig.3

1/5
2

Fig.4

Fig.1

Fig.5

Fig.6

Fig.7

0136474

_Fig. 8_

81

82    83'    83    82

_Fig. 9_

81

82'    82

_Fig. 8a_

92    93    91

_Fig. 9a_

92    91

Fig. 11

Fig. 13

Fig. 12

Fig. 10

Fig. 14

Fig. 15

Fig. 16

0136474

*Fig.18*

*Fig.20*

XXIII

*Fig.19*

*Fig.17*

XXII.

C

7

B

B

A

A

C

X

*Fig.21*

*Fig.23*

b4

7

G

E

G

*Fig.22*

b4

0136474

EUROPEAN SEARCH REPORT

Application number

European Patent Office

**EUROPEAN SEARCH REPORT**

| | DOCUMENTS CONSIDERED TO BE RELEVANT | | EP 84109298.4 |
|---|---|---|---|

| Category | Citation of document with indication, where appropriate, of relevant passages | Relevant to claim | CLASSIFICATION OF THE APPLICATION (Int Cl 4) |
|---|---|---|---|
| A | <u>DE - B - 1 151 574</u> (CONTINENTAL GUMMI) <br> * Fig. 1,2; claim 2 * <br><br> -- | 1,2,9 | H 01 M 2/02 <br> H 01 M 10/06 |
| A | <u>GB - A - 225 942</u> (BATTERIES LTD.) <br> * Fig. 1,2 * <br><br> -- | 1,6,8 | |
| A | <u>CH - A - 129 088</u> (ROBERT BOSCH) <br> * Fig. 1,3; claim and subclaims 1-4 * <br><br> -- | 1,6,8, 9 | |
| A | <u>DE - A - 1 910 352</u> (SOCIETE DES ACCUMULATEURS) <br> * Page 1, line 7 - page 2, line 3 * <br><br> ---- | 10 | |
| | | | **TECHNICAL FIELDS SEARCHED (Int Cl 4)** |
| | | | H 01 M |

The present search report has been drawn up for all claims

| Place of search | Date of completion of the search | Examiner |
|---|---|---|
| VIENNA | 15-11-1984 | LUX |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82